# EUROPEAN PATENT APPLICATION

(11) **EP 3 020 543 A1**
(43) Date of publication of application: **18.05.2016**
(21) Application number: 15193570.7
(22) Date of filing: 09.11.2015
(51) Int. Cl.: B29D 30/12

(54) **TIRE BUILDING DRUM AND ASSEMBLY-DISASSEMBLY APPARATUS THEREOF**

(30) Priority: 13.11.2014 KR 20140157791
(71) Applicant: Hankook Tire Co., Ltd., Seoul 135-723 (KR)
(72) Inventor: JEON, Cheol, 305-722 Daejeon (KR)
(74) Representative: Intès, Didier Gérard André

(57) **Abstract**

A tire building drum (100) including an upper holder (2) with drum shaft (1), several drum segments (3) installed according to circumference of the upper holder (2), the lower holder (4) fixed into the upper holder (2) and drum segments (3), and means (5) for locking the connecting parts (3a) of the drum segments (3) between the upper and lower holders (2, 4).

An assembly/disassembly apparatus (200) for a tire building drum, including a rotary plate (21) to spin the lower holder (4) of the tire building drum (100), drum segment supporting pins (22), and a tire supporting plate (23). While the rotary plate (21) is operated while being connected to clamp cylinder (26) and location adjustment cylinder (27), it rotates the lower holder (4), thereby locking/unlocking the clamp blocks (7a, 7b) of the upper and lower holders (2, 4).

## Description

### Field of the Invention

The present invention relates to a tire building drum and an assembly/disassembly apparatus for the tire building drum which improve capacity ratio by simplifying the process of building drum disassembly/assembly and minimizing abnormality of assembly function and examination, especially through simplified structure.

### Description of the Related Art

A tire is produced by a refining process of making compounds through mixing raw materials, a building process of forming the compounds into components like belts through rolling/pressing/cutting and forming a green tire by attaching the components in a tire building drum in consecutive order, and a vulcanizing process of putting the green tire formed in the building process into a vulcanizer.

In this tire production process, an disassembly/assembly apparatus has been used so as to separate the finished tire produced through the building drum and the vulcanizer from the building drum, but operation trouble takes place in assembly/disassembly operation of building drum due to the complexity of the assembly structure. For example, if the length of the pin supporting the drum segment of the building drum is long, the disassembly/assembly process cannot be carried out due to contact between pin and segment and between pin and lower holder during disassembly of an upper holder of the building drum from the disassembly/assembly apparatus.

In addition, there are frequent problems such as abnormality of function and frequent replacement, caused by the aging of the parts assembling the upper and lower holder of the building drum.

### Disclosure of Related Art Documents

Document 1 : Korean Laid-open No. 10-2009-0125921 (December 8, 2009)

### Content of the Invention

### Problem to be Solved

The present invention is to solve the aforementioned problems. The purpose of the present invention is to simplify the structure of a tire building drum and to minimize abnormality of assembly function and examination, thereby aiming to provide a tire building drum and an assembly/disassembly apparatus for assembling and disassembling a tire building drum improving capacity ratio and minimizing the number of mechanical elements.

### Means for Solving Problem

A tire building drum according to a first aspect of the present invention and thus aiming to achieve the above object includes a tire building drum for producing and building a green tire, the tire building drum comprising an upper holder with a drum shaft, several drum segments installed along the circumference of the upper holder, a lower holder fixed into the upper holder and the drum segments, and means for locking connecting parts of the drum segments between the upper holder and the lower holder.

In an embodiment, the upper holder further comprises the drum shaft, location determination pins and clamp blocks to be assembled into the lower holder.

In an embodiment, the location determination pins of the means for locking are detachably engaged with coupling holes in the connecting parts of the drum segments in order to lock and keep location of the drum segments into the building drum, and the lower holder is adapted to rotate and then corresponding clamp blocks of the lower holder are adapted to engage with corresponding clamp blocks of means for locking provided at the upper holder, whereby unlocking of the upper and lower holder and several drum segments is prevented by the engagement.

In an embodiment, the horizontal tilt angle of clamp blocks of the upper holder and the lower holder is between 1 and 3 degrees.

In an embodiment, the lower holder is assembled with the upper holder by means of the clamp blocks of the lower and upper holder, thereby being in contact with the underside of the connecting part of drum segments and preventing movement of the drum segments.

In an embodiment, a key of the lower holder is detachably engaged with key way of the assembly/disassembly apparatus for a tire building drum.

In a further aspect of the present invention, an assembly/disassembly apparatus for a tire building drum comprises a rotary plate spinning the lower holder of building drum, a drum segment supporting plate ascending and descending through an up-down cylinder and a tire supporting plate.

In a further aspect of the present invention, an assembly/disassembly apparatus for a tire building drum comprises a rotary plate adapted to spin a lower holder of a tire building drum, a drum segment supporting pin and a tire supporting plate; the rotary plate is connected to a clamp cylinder and a location adjustment cylinder through a shaft and a link, and the rotary plate is adapted to rotate the lower holder in the clockwise and counterclockwise direction through a combination of key of the lower holder and key way of the rotary plate, thereby locking or unlocking clamp block of the upper and lower holder.

In an embodiment, the drum segment supporting pin is established to remove interference in the disassembly process of drum segment, which is supporting the overall tire building drum or descending individually by ascending and descending through up-down cylinder.

In an embodiment, the tire supporting plate has a function of supporting a tire when each drum segment of the tire building drum is disassembled from the inside of the tire.

In an embodiment, the rotary plate is adapted, when it is assembled into the shaft, to rotate in the clockwise or counterclockwise direction according to push or pull of link, fixed into the shaft, by the clamp cylinder.

### Effects of the Invention

The present invention minimizes a number of mechanical elements of the building drum, reduces abnormality of assembly function caused by aging of components, and improves tire production automation since abnormality of assembly function can be removed and examination of the building drum may be carried out more easily.

### Brief Description of Drawings

FIG. 1 is a cross section of disassembled tire building drum according to an embodiment of the present invention,
FIG. 2 is a side elevation of the assembly/disassembly apparatus of the tire building drum according to an embodiment of the present invention,
FIGS. 3 (A) to (E) show the process of disassembling tire building drum from the assembly/disassembly apparatus of the tire building drum according to an embodiment of the present invention,
FIGS. 4 (A) to (D) show locking/unlocking states of the lower holder of the tire building drum according to an embodiment of the present invention,
FIG. 5 is a flow chart illustrating each drum segment being disassembled from the finished tire.

### Concrete contents for implementation of invention

The embodiments of the present invention are described in detail hereafter by reference to the accompanying drawings.

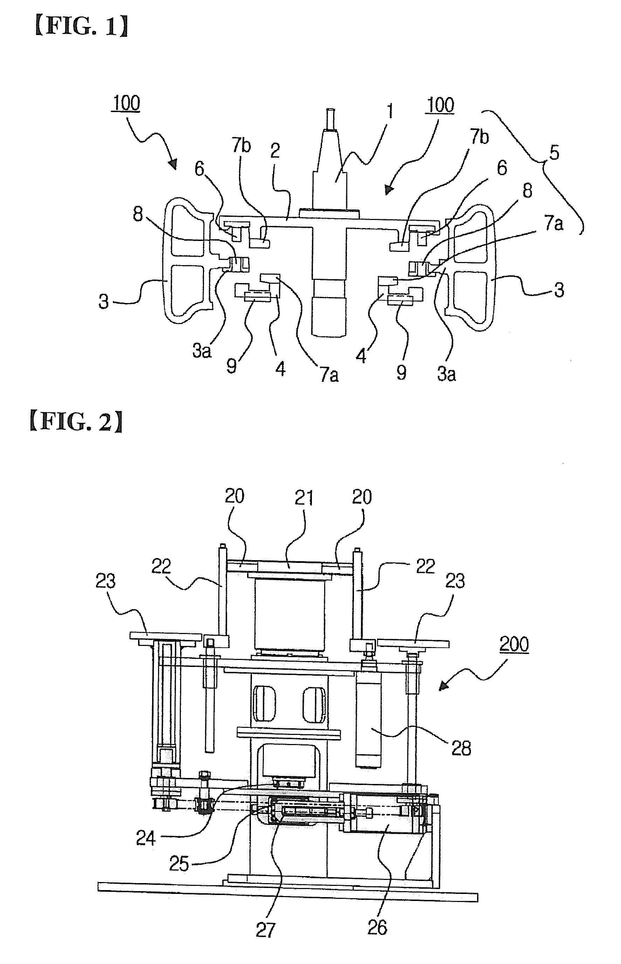

FIG. 1 is a cross section of a disassembled tire building drum according to an embodiment of the present invention.

Tire building drum 100 includes an upper holder 2 with a drum shaft 1, several drum segments 3 installed along the circumference of the upper holder 2, a lower holder 4 fixed into the upper holder 2 and the drum segments 3, and means 5 for locking a connecting part 3a of the drum segments 3 between the upper holder and the lower holder 2, 4.

The upper holder 2 includes the drum shaft 1, location determination pins 6 and clamp blocks 7b to be assembled into the lower holder 4, while the drum shaft 1 has a function of being fixed into gripper and chuck and supports rotation of the building drum 100 in the tire production process.

The location determination pins 6 of means for locking 5 are detachably engaged with coupling holes 8 provided in the connecting part 3a of the drum segments 3 in order to lock and keep location of drum segment 3 into the building drum 100. If the lower holder 4 rotates and a clamp block 7a of the lower holder 4 engages with a corresponding clamp block 7b of means for locking 5 provided at the upper holder 2, unlocking of the upper and lower holder 2, 4 and several drum segments 3 is prevented by the engagement.

The horizontal tilt angle of the respective clamp block 7a, 7b of the upper holder 2 and the lower holder 4 is preferably between 1 and 3 degrees. According to the tilt angle, vertical direction force is applied onto the slope by the engagement in proportion to locking force. In this case, it is usual the force for unlocking clamp blocks 7a, 7b is smaller than the force for locking, but the former may be bigger if the upper holder 2 and the lower holder 4 expand in the vulcanizing process of tire.

Therefore, locking force of the clamp blocks 7a, 7b is determined by the magnitude of force to unlock the clamp block 7a, 7b through one cycle of tire production process.

Meanwhile, the lower holder 4 is assembled with the upper holder 2 by means of the respective clamp block 7a, 7b of the lower and upper holder 4, 2, thereby being in contact with the underside of connecting parts 3a of the drum segments 3 and preventing movement of the drum segments 3.

If the rotary power of a rotary plate 21 of an assembly/disassembly apparatus for tire building drum 200 is transmitted, the lower holder 4 rotates in the clockwise or counterclockwise direction, thereby engaging or disengaging the corresponding clamp block 7a to or from the clamp block 7b of the upper holder since the key 9 of the lower holder 4 is combined with key way 20 of the assembly/disassembly apparatus 200 for tire building drum 100, to be described later.

Regarding the tire building drum 100, green tire (not shown in drawing) is produced through the drum segment 3 installed along the outer circumference surface of the tire building drum 100 in the process of tire building, and the green tire along with the tire building drum 100 of the present invention is put into vulcanizing mold of vulcanizer and is vulcanized, thereby producing finished tire.

The finished tire is disassembled from the tire building drum 100 by the assembly/disassembly apparatus 200 for tire building drum 100, to be disclosed in the following.

Referring to FIG. 2, below is an explanation of the assembly/disassembly apparatus 200 for tire building drum 100 according to an embodiment of the present invention.

The assembly/disassembly apparatus 200 for tire building drum 100 according to an embodiment of the present invention comprises a rotary plate 21 spinning the lower holder 4 of the tire building drum 100, a drum segment supporting pin 22, and a tire supporting plate 23.

While the rotary plate 21 is operated with being connected to a clamp cylinder 26 and a location adjustment cylinder 27 through a shaft 24 and link 25, it rotates the lower holder 4 in clockwise or counterclockwise direction through a combination of key 9 of the lower holder 4 and key way 20 of rotary plate 21, thereby locking or unlocking clamp block 7a, 7b of the upper and lower holder 2, 4.

The drum segment supporting pin 22 is established to remove interference in the disassembly process of drum segment 3, which is supporting the overall tire building drum 100 or descending individually by ascending and descending through up-down cylinder 28.

Also, the tire supporting plate 23 has a function of supporting tire 300 when each drum segment 3 of the tire building drum 100 is disassembled from the inside of tire 300.

In the mean time, the rotary plate 21 is connected to shaft 24 and rotates in clockwise or counterclockwise direction according to push or pull of link 25 fixed into the shaft 24 by clamp cylinder 26. In this case, locking force and operation speed are determined by adjusting speed controller of pressure and air inlet of the clamp cylinder 26.

Alternatively, instead of the mechanism moving link 25 connected to the shaft 24, a pinion gear may be installed in shaft 24 as necessary, and rotary plate 21 may be rotated by making rack gear engage with pinion gear.

And motor may be installed instead of the clamp cylinder 26, and in this case, the lower holder 4 can be assembled with steady force by torque control.

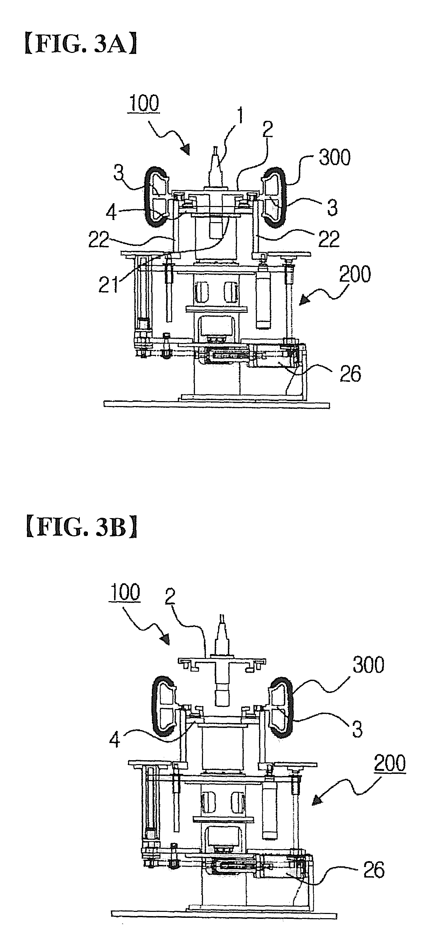

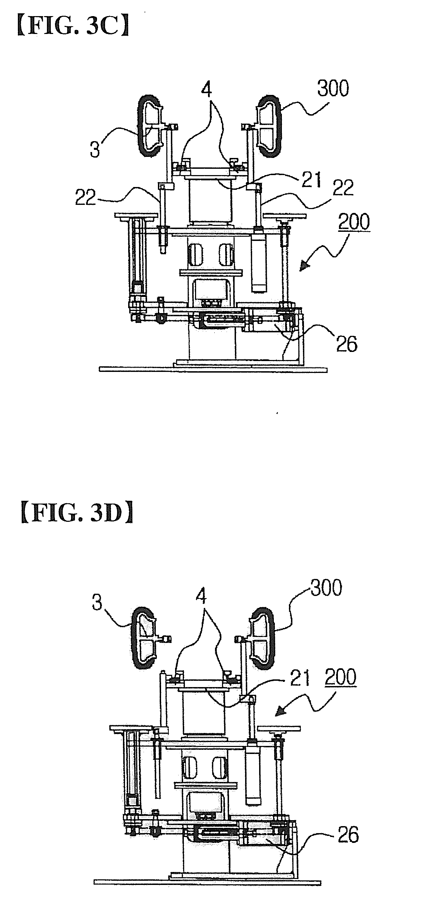

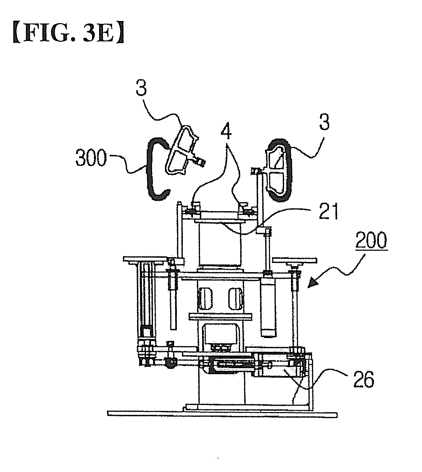

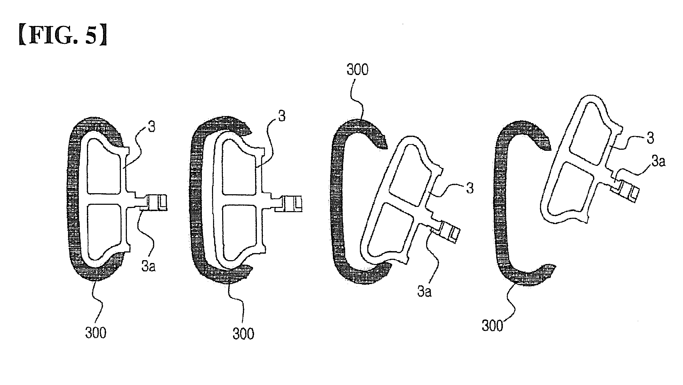

Referring to FIGS. 3 and 5, below is an explanation of disassembly operation of the tire building drum 100 using the assembly/disassembly apparatus 200 for tire building drum.

First of all, the process of building the green tire is completed in the drum segments 3 of the tire building drum 100, and the green tire along with the tire building drum 100 is put into vulcanizing mold of vulcanizer and is vulcanized.

Then, the tire building drum 100, to which the finished tire 300 is attached after vulcanization, is put into the assembly/disassembly apparatus 200 for tire building drum, as illustrated in FIG. 2.

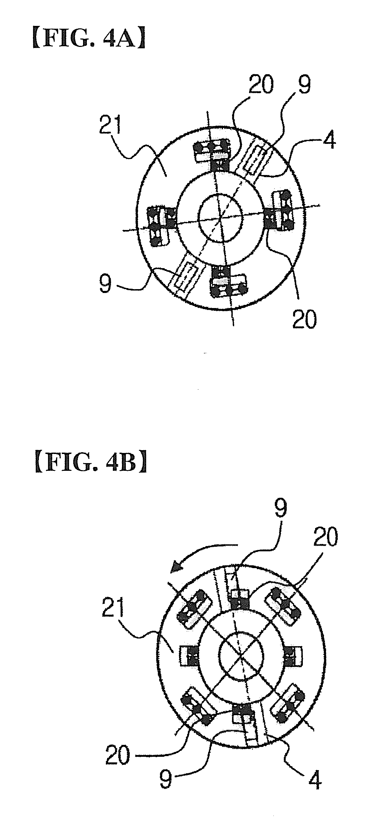

The rotary plate 21 of the assembly/disassembly apparatus 200 for tire building drum, as illustrated in FIG. 4A, should have been rotated into the location in which key 9 of the lower holder 4 and key way 20 of the rotary plate 21 may be combined.

If the input of the tire building drum 100 is completed, the rotary plate 21, as illustrated in FIG. 4B, rotates toward arrow in counterclockwise direction, thereby disassembling the lower holder 4 from the upper holder 2 of the tire building drum 100 into an unlocked condition [refer to FIG. 3A].

If the lower holder 4 is disassembled in rotary plate 21 of the assembly/disassembly apparatus 200 for tire building drum as shown in FIG. 4B, the upper holder 2 is disassembled toward vertical direction from the tire building drum 100 by the use of drum shaft gripper, and the disassembled upper holder 2 is moved into storage box and stored as illustrated in FIG. 3B.

As disclosed in FIG. 3B, the upper holder 2 is disassembled from the tire building drum 100, and the whole part of drum segment supporting pin 22 is elevated in order to disassemble the drum segments 3.

And after locking each drum segment 3 using a drum segment gripper, the drum segment 3 is disassembled from the inside of finished tire 300 as shown in FIG. 5. In this case, as disclosed in FIGS. 3D and 3E, the drum segment gripper removes movement interference by descending each drum segment supporting pin 22 before the drum segment gripper fixes and carries out disassembly operation of the drum segment 3.

And as shown in FIGS. 3E and 5, each drum segment 3 disassembled from the finished tire 300 moves to another segment storage box, and the drum segments 3 are all disassembled from finished tire 300, thereby the finished tire 300 is released out.

Meanwhile, after disassembly of tire building drum 100 is completed using the assembly/disassembly apparatus 200 for tire building drum, assembly of tire building drum 100 is carried out in reverse order of the aforementioned disassembly operation.

In other words, after ascending the overall construction of descended drum segment supporting pin 22, each drum segment 3 is moved into the assembly/disassembly apparatus 200 for tire building drum from the drum segment storage box, and the overall construction of the drum segments 3 safely rests on the drum segment supporting pin 22, and the drum segment supporting pin 22 is descended and then the upper holder 2 stored in storage box is moved and combined with the drum segment 3.

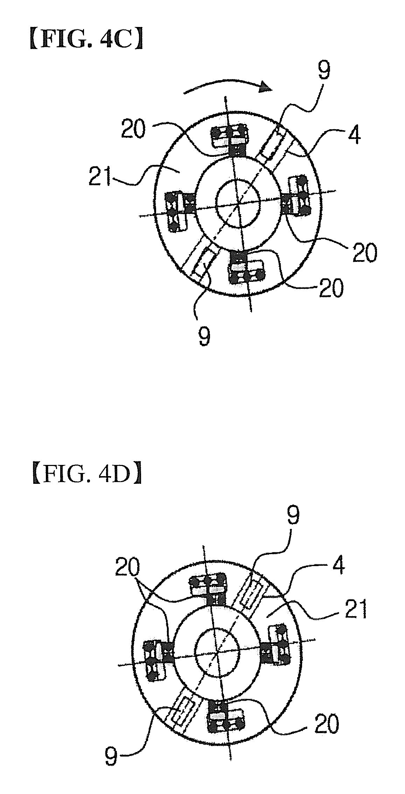

After that, as illustrated in FIG. 4 (C), the assembly process of the tire building drum 100 is completed, when the lower holder 4 rotates toward clockwise direction and is locked in rotary plate 21 of the assembly/disassembly apparatus 200 for tire building drum.

Thus, the location adjustment cylinder 27 of the assembly/disassembly apparatus 200 for tire building drum is operated, thereby the tire building drum 100 is assembled, with the rotary plate 21 rotated as disclosed in FIG. 4D.

In this case, before the operation of the location adjustment cylinder 27, air in clamp cylinder 26 should be emitted, thereby any force should not be applied on the rotary plate 21.

Thus, the assembly/disassembly apparatus 200 for tire building drum enables a series of automation processes of disassembling the tire building drum 100, vulcanizing the outside of the tire building drum 100, thereby disassembling the finished tire 300.

Tire building drum and assembly/disassembly apparatus thereof according to an embodiment of the present invention discloses the process of vulcanizing tire building drum producing green tire and green tire in vulcanizing mold and assembling for disassembly and reworking in order to take finished tire out of tire building drum through the assembly/disassembly apparatus of tire building drum, but the present invention is not confined to a specific example, and various forms may be achieved within technical categories and ideas of the present invention.

The scope of protection of the present invention is not confined to a specific example, and various modifications may be achieved within drawings and claims of the present invention.

### Explanation of reference signs

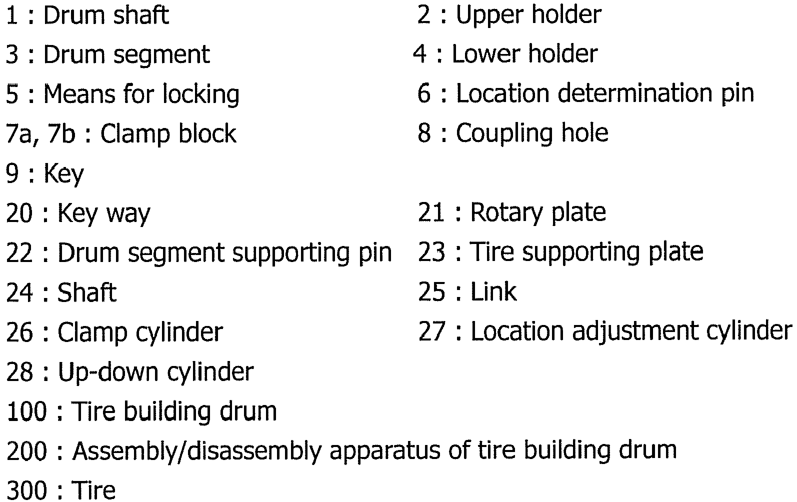

## Claims

1. A tire building drum for producing and building a green tire, the tire building drum comprising an upper holder (2) with a drum shaft (1), several drum segments (3) installed along a circumference of the upper holder (2), a lower holder (4) fixed into the upper holder (2) and the drum segments (3), and means (5) for locking connecting parts (3a) of the drum segments (3) between the upper holder and the lower holder (2, 4).

2. A tire building drum according to claim 1, wherein the upper holder (2) further comprises the drum shaft (1), location determination pins (6) and clamp blocks (7b) to be assembled into the lower holder (4).

3. A tire building drum according to claim 2, wherein the location determination pins (6) of the means for locking (5) are detachably engaged with coupling holes (8) in the connecting parts (3a) of the drum segments (3) in order to lock and keep location of the drum segments (3) into the building drum (100), and the lower holder (4) is adapted to rotate and then corresponding clamp blocks (7a) of the lower holder (4) are adapted to engage with corresponding clamp blocks (7b) of means for locking (5) provided at the upper holder (2), whereby unlocking of the upper and lower holder (2, 4) and several drum segments (3) is prevented by the engagement.

4. A tire building drum according to claim 3, wherein an horizontal tilt angle of clamp blocks (7a, 7b) of the upper holder (2) and the lower holder (4) is between 1 and 3 degrees.

5. A tire building drum according to claim 1, wherein the lower holder (4) is assembled with the upper holder (2) by means of the clamp blocks (7a, 7b) of the lower and upper holder (4, 2), thereby being in contact with the underside of the connecting part (3a) of drum segments (3) and preventing movement of the drum segments (3).

6. A tire building drum according to claim 1, wherein key (9) of the lower holder (4) is detachably engaged with key way (20) of the assembly/disassembly apparatus (200) for a tire building drum.

7. Assembly/disassembly apparatus for a tire building drum (100), comprising a rotary plate (21) adapted to spin a lower holder (4) of a tire building drum (100), a drum segment supporting pin (22) and a tire supporting plate (23), and wherein the rotary plate (21) is connected to a clamp cylinder (26) and a location adjustment cylinder (27) through a shaft (24) and a link (25), and the rotary plate (21) is adapted to rotate the lower holder (4) in the clockwise and counterclockwise direction through a combination of key (9) of the lower holder (4) and key way (20) of the rotary plate (21), thereby locking or unlocking clamp block (7a, 7b) of the upper and lower holder (2, 4).

8. The assembly/disassembly apparatus for a tire building drum according to claim 7, wherein the drum segment supporting pin (22) is established to remove interference in the disassembly process of drum segment (3), which is supporting the overall tire building drum (100) or descending individually by ascending and descending through up-down cylinder (28).

9. The assembly/disassembly apparatus for a tire building drum according to claim 7, wherein the tire supporting plate (23) has a function of supporting a tire (300) when each drum segment (3) of the tire building drum (100) is disassembled from the inside of the tire (300).

10. The assembly/disassembly apparatus of tire building drum according to claim 7, wherein the rotary plate (21) is adapted, when it is assembled into the shaft, to rotate in the clockwise or counterclockwise direction according to push or pull of link (25), fixed into the shaft (24), by the clamp cylinder (26).
